## Europäisches Patentamt

## European Patent Office

## Office européen des brevets

(11) Veröffentlichungsnummer: **0 112 296**
**B1**

(12) **EUROPÄISCHE PATENTSCHRIFT**

(45) Veröffentlichungstag der Patentschrift:
04.02.87

(21) Anmeldenummer: 83810597.1

(22) Anmeldetag: 15.12.83

(51) Int. Cl.⁴: **G 05 D 13/20, B 05 B 9/08**

(54) Flüssigkeitszerstäuber für die Abgabe von Flüssigkeitströpfchen mit gleichbleibender Tröpfchengrösse.

(30) Priorität: 21.12.82 CH 7468/82

(43) Veröffentlichungstag der Anmeldung:
27.06.84 Patentblatt 84/26

(45) Bekanntmachung des Hinweises auf die Patenterteilung:
04.02.87 Patentblatt 87/6

(84) Benannte Vertragsstaaten:
AT CH DE FR GB IT LI NL

(56) Entgegenhaltungen:
DE-C-85 427
FR-A-1 314 414
US-A-3 491 609

(73) Patentinhaber: CIBA- GEIGY AG, Klybeckstrasse
141, CH- 4002 Basel (CH)

(72) Erfinder: Graber, Alfred, Weidstrasse 167, CH- 5525
Fischbach- Göslikon (CH)

## Beschreibung

Die Erfindung betrifft einen Flüssigkeitszerstäuber für die Abgabe von Flüssigkeitströpfchen mit gleichbleibender Tröpfchengrösse gemäss dem Oberbegriff des unabhängigen Patentanspruchs 1.

Zum Versprühen von chemischen Stoffen, wie Unkrautvertilgungsmittel, Insektizide, usw. in der Landwirtschaft, sind Flüssigkeitsversprüheinrichtungen mit Sprühdüsen bekannt wie sie z. B. in der DE–A 24 52 750 oder in der DE–A 25 41 213 beschrieben sind. Ein schwerwiegender Nachteil dieser üblichen Sprühdüsengeräte besteht darin, dass die Tröpfchengrösse sehr unterschiedlich ist. Kleine Tröpfchen verdunsten zu rasch oder werden vom Wind fortgeblasen, so dass sie wirkungslos sind. Zu grosse Tröpfchen führen zu einem unnötig hohen Flüssigkeits-verbrauch und daher schlechten Wirkungsgrad.

Ein besserer Wirkungsgrad wird erreicht durch Geräte mit rotierenden Scheiben, wie sie z. B. in den DE–A 25 35 087, DE–A 31 45 109 oder FR–A 1 314 414 beschrieben sind. Die Flüssigkeit wird auf die Scheibe geleitet, wo sie infolge der Zentrifugalkraft nach aussen befördert und weggeschleudert wird. Durch Regelung der Drehzahl und durch Anbringen einer Verzahnung am Aussenrand der Scheiben kann die Tröpfchengrösse relativ genau bestimmt werden, was eine sehr gleichmässige Verteilung der Flüssigkeit gewährleistet. Nachteilig ist jedoch der Antrieb einerseits mittels der Laufräder oder anderseits mit einem Elektromotor oder Handkurbel-Riemenantrieb. Geräte mit Batterie- oder Handkurbel-Riemenantrieb sind relativ schwer. Bei Batteriegeräten ist zudem die Einsatzdauer wegen der Batterie beschränkt. Ferner sind die Geräte korrosionsanfällig und langfristig teuer im Unterhalt, weil die Batterien periodisch ersetzt werden müssen.

Mit einem elektrischen Antrieb eignen sich die bekannten Geräte z. B. nicht für Entwicklungsländer, obwohl gerade in diesen Ländern ein grosser Bedarf für Flüssigkeitsversprühgeräte vorhanden ist. Auch ein Antrieb von Laufrädern aus ist dort nicht geeignet, wo infolge der Beschaffenheit des Geländes tragbare Geräte benötigt werden.

Die Erfindung stellt sich nun zur Aufgabe, einen Flüssigkeitszerstäuber zu schaffen, welcher leicht tragbar, einfach und betriebssicher ist. Ferner soll er eine lange Lebensdauer aufweisen und in der Herstellung billig sein. Die Lösung dieser Aufgabe erfolgt durch einen Flüssigkeitszerstäuber, welcher die in der Kennzeichnung des Patentanspruchs 1 definierten Merkmale aufweist.

In der Praxis hat sich gezeigt, dass der Luft-Handpumpenantrieb ohne übermässigen menschlichen Kraft- bzw. Leistungsaufwand zum gleichmässigen Besprühen auch grösserer Flächen- bzw. Pflanzenkulturen völlig ausreicht. Dies war nicht zu erwarten. Einerseits deshalb, weil bei direktem Versprühen mittels Pressluftdüsen der Wirkungsgrad bekanntlich so schlecht ist, dass bei solchen Geräten mit Handpumpen praktisch nur einzelne kleinere Pflanzen behandelt werden können bzw. Pressluftquellen grosser Leistungsfähigkeit vorhanden sein müssen. Anderseits deshalb, weil für den Antrieb von Sprühscheiben mittels Druckluftturbinen bislang offenbar Druckluftquellen (Pressluftflaschen, Kompressoren) für erforderlich gehalten werden, welche bezüglich Druck und Leistung, weit über demjenigen liegen, was durch eine einfache Handpumpe durch menschliche Kraft über längere Zeit geliefert werden kann, wie z. B. USA–A 4 275 838 belegt.

Nachfolgend wird anhand der Zeichnungen ein Ausführungsbeispiel der Erfindung näher erläutert. Es zeigen:

Fig. 1 eine perspektivische Ansicht eines tragbaren Flüssigkeitsverteilgerätes,

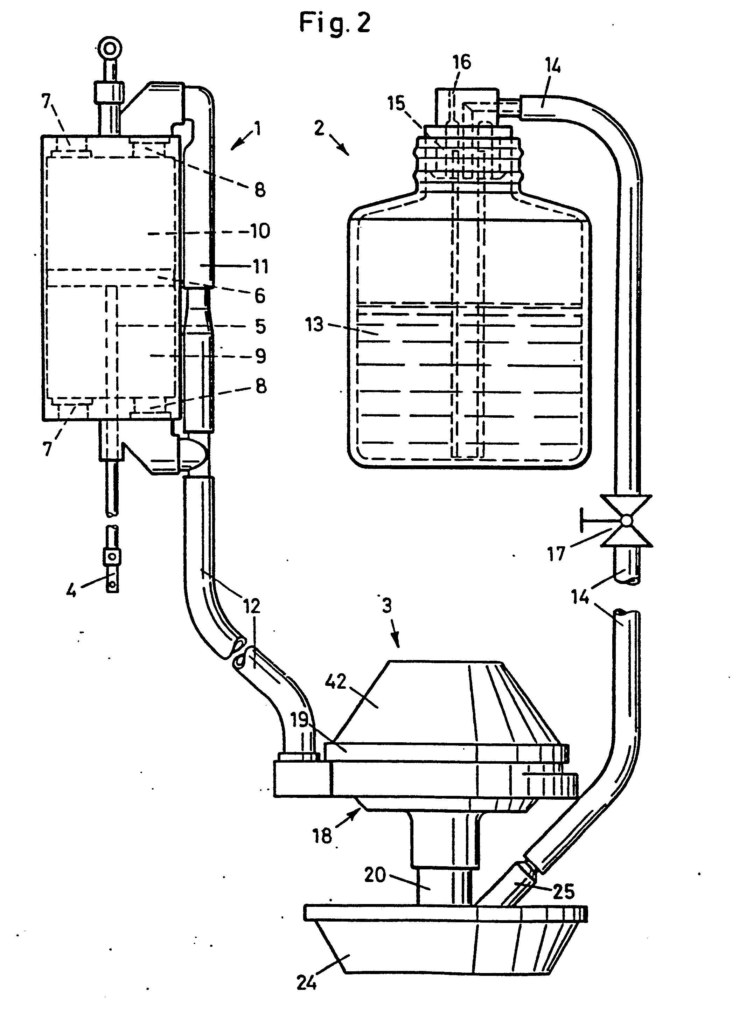

Fig. 2 schematisch den Aufbau des Gerätes gemäss Fig. 1,

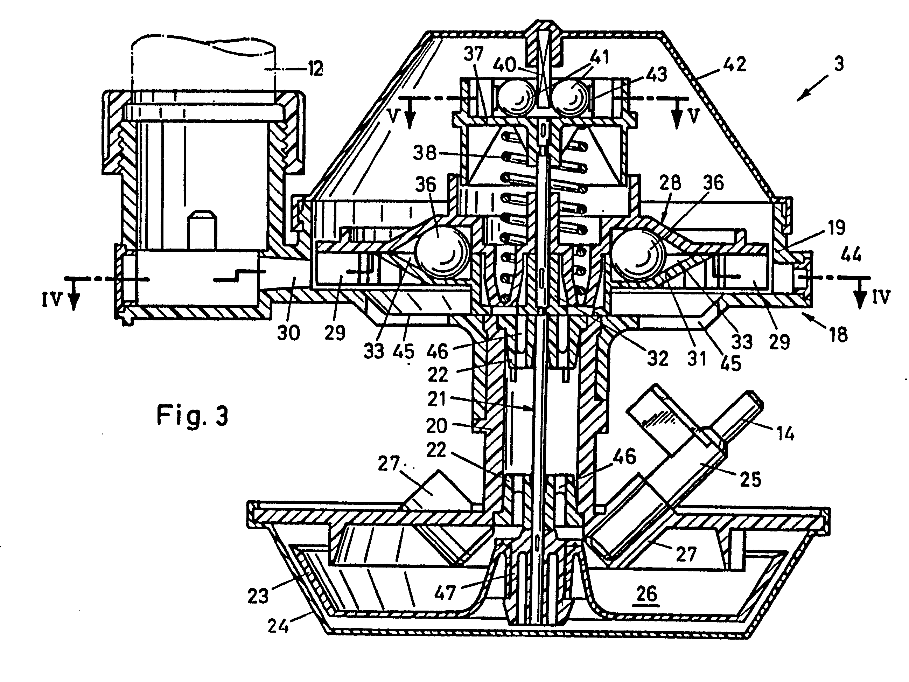

Fig. 3 einen Längsschnitt durch die Flüssigkeitsverteilvorrichtung des Gerätes gemäss Fig. 1,

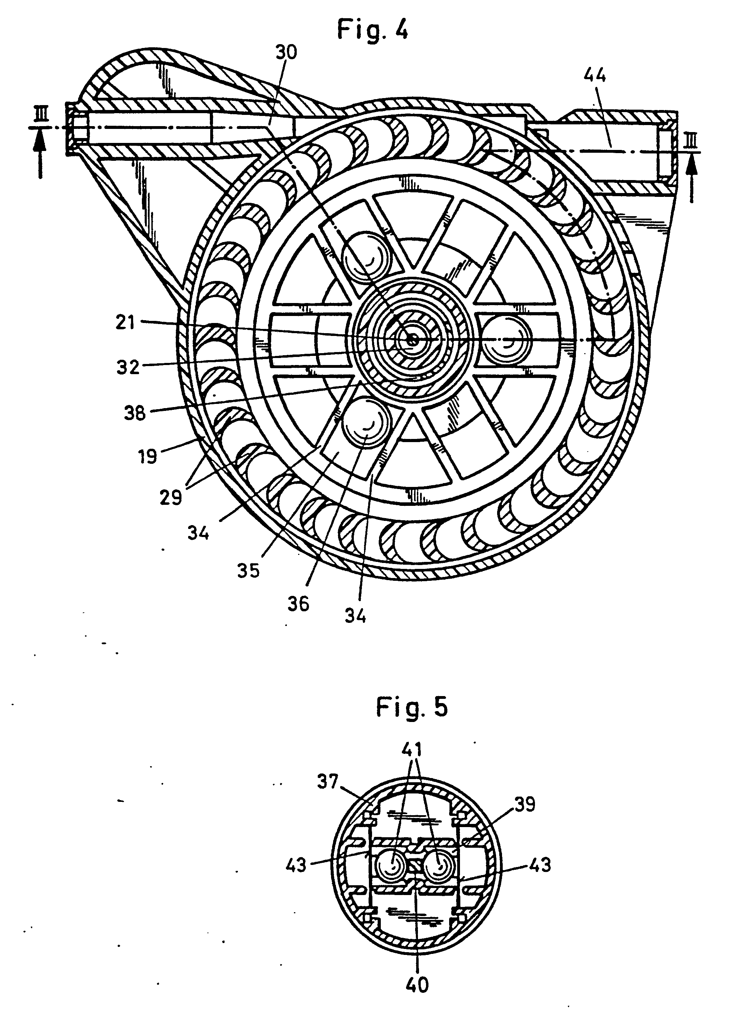

Fig. 4 einen Querschnitt nach der Linie IV – IV durch die Vorrichtung gemäss Fig. 3,

Fig. 5 einen Querschnitt nach der Linie V – V durch die Vorrichtung gemäss Fig. 3 und

Fig. 6 die Kupplung der Verteilscheibe mit der Antriebswelle der Verteilvorrichtung.

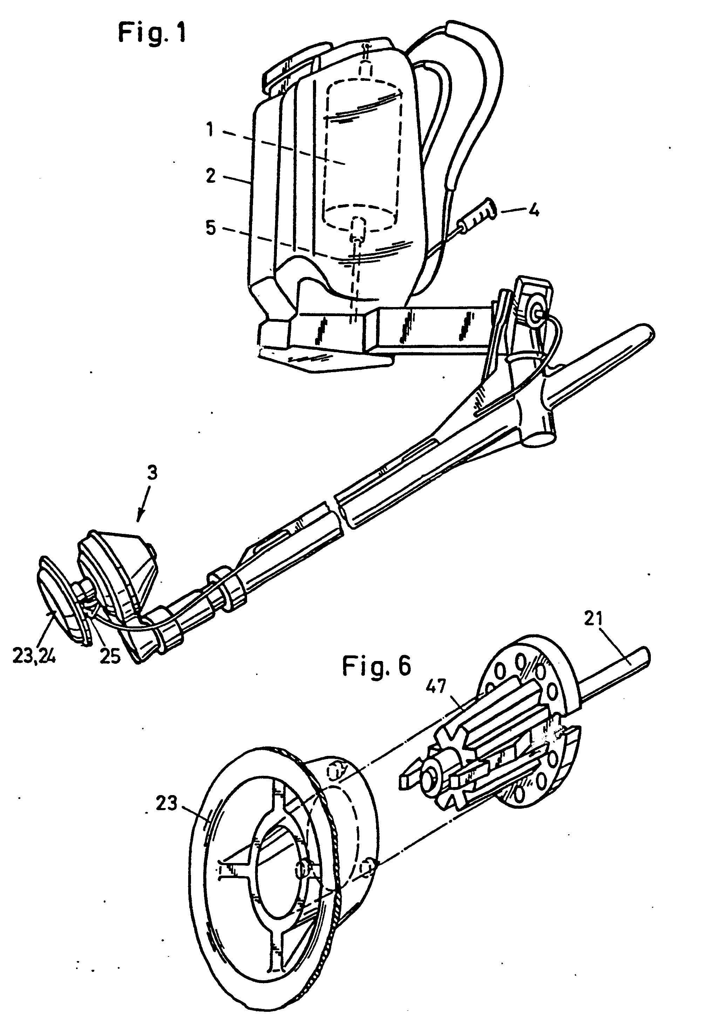

Das tragbare Gerät weist eine doppelt wirkende manuell bedienbare Luftpumpe 1, einen Flüssigkeitsbehälter 2 und eine Flüssigkeitsverteilvorrichtung 3 auf. Diese Einheiten sind zweckmässigerweise so zusammengebaut, dass sie auf dem Rücken der Bedienungsperson getragen werden können, wie in Fig. 1 gezeigt ist.

Die über einen Hebel 4 oder einen Kurbeltrieb durch die Bedienungsperson zu betätigende Pumpe 1 ist mit einer Kolbenstange 5 versehen, auf welcher der doppelt wirkende Kolben 6 sitzt. An den beiden Enden des Zylinderraumes sind Ansaug- und Druckventile 7 bzw. 8 angeordnet, wobei die Druckluft von den beiden Zylinderteilräumen 9, 10 in ein Sammelrohr 11 gelangt, welches über eine Druckleitung 12 mit der Verteilvorrichtung 3 verbunden ist. Die Grösse des Sammelrohres 11 ist so gewählt, dass eine gewisse Pufferwirkung für die Luft erzielt wird, damit die Luftzufuhr trotz der Pumpenhübe relativ konstant ist.

Der Flüssigkeitsbehälter 2 ist mit der zu verteilenden Flüssigkeit 13 gefüllt, die unter Druck stehen kann. Die Entnahmeleitung 14 führt vom Verschluss 15 der mit einer Entlüftung 16 versehen sein kann, über ein Ventil 17 ebenfalls zur Verteilvorrichtung 3.

Die Verteilvorrichtung 3 weist ein Gehäuse 18 auf, bestehend aus einem Gehäuseoberteil 19 und einem Gehäuseunterteil 20, in welchem eine Antriebswelle 21 gelagert ist. Die beiden Kunststofflager 22 sind in den zylindrischen Innenraum des Gehäuseunterteils 20 eingepresst. Das nach unten ragende Ende der Antriebswelle 21 trägt die tellerförmige Verteilscheibe 23, deren Aussenrand mit einer Zähnung versehen sein kann. Zum Schutz der Verteilscheibe 23 bei Nichtgebrauch des Gerätes ist eine entfernbare Abschirmkappe 24 vorgesehen. Die Verteilscheibe 23 ist lösbar auf die Kupplungsnabe 47 aufgeschnappt, welche drehfest mit der Welle 21 verbunden ist, wie in Fig. 6 gezeigt ist. Dadurch können verschiedene Verteilscheiben gegeneinander bequem ausgetauscht werden.

Eine mit der Flüssigkeitsleitung 14 verbundene kalibrierte Düse 25 mündet in den Zwischenraum 26 auf der Innenseite der Verteilscheibe 23. Sie führt eine genau dosierte Flüssigkeitsmenge pro Zeiteinheit in diesen Zwischenraum 26. Durch die rotierende Scheibe 23 wird die Flüssigkeit in Tropfenform fein verteilt nach aussen geschleudert. Am Gehäuseunterteil 20 sind mehrere Düsenanschlußstellen 27 vorgesehen, die wahlweise benützt werden können.

Der Antrieb der Scheibe 23 erfolgt durch ein auf der Antriebswelle 21 frei drehbar und axial verschiebbar angeordnetes Turbinenrad 28, dessen Schaufelkranz 29 durch die über die Luftdüse 30 tangential einströmende Druckluft beaufschlagt wird. Die Düse 30 steht über die Luftleitung 12 mit der Pumpe 1 in Verbindung.

Um eine gleichmässige Drehzahl zu gewährleisten, sind Mittel zur Drehzahlregulierung vorgesehen. Das Turbinenrad 28 ist benachbart zu einer Mitnehmerscheibe 31 angeordnet, die unterhalb des Turbinenrades 28 drehfest auf der Antriebswelle 21 sitzt, wobei ihre Nabe 32 auf die Welle aufgepresst ist. Zwischen der Scheibe 31 und dem Rad 28 befindet sich ein Ringraum 33, der sich nach aussen keilförmig verjüngt. Auf den einander benachbarten Flächen des Schaufelrades 28 und der Mitnehmerscheibe 31 sind eine Anzahl Rippen 34 angeordnet, die je sechs gegengleich ausgebildete Laufbahnen 35 begrenzen, wobei drei Metallkugeln 36 in je drei dieser Laufbahnen 35 frei beweglich gelagert sind.

Eine gegen einen auf der Welle mitdrehenden oberen Anschlag 37 abgestützte Feder 38 drückt das Turbinenrad 28 federnd gegen die Kugel 36, die ihrerseits dadurch gegen die Mitnehmerscheibe 31 gepresst werden.

Bei zunehmender Drehzahl der Welle 21 bewegen sich die Kugeln 36 infolge der Zentrifugalkraft nach aussen in den Keil, verschieben dadurch das Turbinenrad 28 auf der Antriebswelle 21 entgegen der Kraft der Feder 38 nach oben, so dass seine Schaufeln nur noch teilweise von der Luftströmung beaufschlagt werden, was wiederum die Drehzahl reduziert. Die Antriebskraft wird über die Kugeln 36 und die Rippen 34 auf die Mitnehmerscheibe 31 übertragen. Die Vorrichtung wird so eingestellt, dass sich eine optimale Drehzahl automatisch einpendelt. Durch entsprechende Wahl der Feder 38 und der Anzahl Kugeln 36 wird die gewünschte Drehzahl bestimmt.

Um die Bedienung des Gerätes weiter zu vereinfachen, sind Einrichtungen zur Erzeugung akustischer Geräusche vorgesehen, die das Überschreiten einer oberen bzw. einer unteren Drehzahl signalisieren.

Dazu ist der auf dem oberen Ende der Antriebswelle 21 drehfest sitzende Anschlag 37 mit einem radialen Führungskanal 39 versehen, in welchem zwei weitere Kugeln 41 untergebracht sind. Ein Vierkantstab 40, der in Gehäusedeckel 42 fixiert ist, ragt nach unten in den Zwischenraum zwischen den beiden Kugeln 41. Bei hoher Drehzahl werden die Kugeln 41 durch die Zentrifugalkraft nach aussen gedrückt, gegen zwei Blattfedern 43. Bei sinkender Drehzahl bewegen sich die Kugeln nach innen und berühren den Vierkantstab, was ein kesselndes Geräusch erzeugt und der Bedienungsperson signalisiert, dass die Pumpleistung erhöht werden muss. Die Abdeckung 42 dient dabei als Schallkörper.

Zur Signalisierung einer zu hohen Drehzahl, welche mit einer unnötig hohen Pumpleistung der Bedienungsperson verbunden ist, dient eine Pfeife 44, die in der Verlängerung der Luftdüse 30 auf der anderen Seite des Schaufelkranzes 29 angeordnet ist. Wenn sich nun das Turbinenrad 28 hebt infolge zu hoher Drehzahl, strömt ein Teil der Luft statt durch die Luftaustrittsöffnungen 45 im Gehäuse nach unten, durch die Pfeife 44.

Dadurch wird die Bedienung des Gerätes äusserst einfach. Die Bedienungsperson braucht nur auf die akustischen Signale zu achten und die Pumpe entsprechend zu betätigen. Bereits nach kurzer Anlernzeit wird so das Gerät automatisch richtig bedient, so dass eine optimale Verteilung der Flüssigkeit gewährleistet ist und die Bedienungsperson keine unnötige Arbeitsleistung erbringen muss.

Da das Gerät keine Batterien und keinen Elektromotor aufweist, ist es sehr handlich und leicht und die Korrosionsgefahr bei auslaufenden Säuren ist gebannt. Das Gerät ist im wesentlichen aus Kunststoff gefertigt, was eine kompakte Bauweise und eine problemlose Reinigung gewährleistet. Die Reinigung erfolgt z. B. durch Abspülen und Eintauchen des Gerätes in Wasser. Dazu sind alle Innenräume mit Öffnungen 45, 46 versehen, damit das Wasser abfliessen kann.

Der Antrieb hat eine Gangreserve, die einerseits durch die Pufferwirkung der Luft im Sammelrohr der Luftpumpe erreicht wird, anderseits durch die Trägheit des Schaufelrades, dessen Durchmesser möglichst gross gewählt wird. Ausser ihrer Regelfunktionen bewirken die Kugeln ebenfalls eine Erhöhung der Trägheit des Schaufelrades, wobei bis zu sechs Kugeln aus einem schweren Material Verwendung finden können. Die durch die Energiespeicherung erzielte Gangreserve erlaubt der Bedienungsperson eine kurze Pause nach Erreichen der höchsten Drehzahl.

## Patentansprüche

1. Tragbarer Flüssigkeitszerstäuber für Agrochemikalien, wie Unkraut- oder Insektenbekämfungsmittel mit einem Flüssigkeitsbehälter und mit einer in einen Sprühkopf befindlichen roterenden Sprühscheibe mit Antrieb, dadurch gekennzeichnet, dass der Antrieb für die Sprühscheibe (23) ein durch einen aus einer Luft-Handpumpe (1) über eine Düse (30) zugeleiteten Luftstrom beaufschlagbares Schaufelrad (28, 29) ist.

2. Flüssigkeitszerstäuber nach Patentan-spruch 1, dadurch gekennzeichnet, dass eine Drehzahlregelung für die Drehzahl der Sprühscheibe (23) vorhanden ist.

3. Flüssigkeitszerstäuber nach Patentanspruch 2, dadurch gekennzeichnet, dass das Schaufelrad (28, 29) axial verschiebbar auf einer Welle (21) angeordnet ist und gegen unter dem Einfluss der Zentrifugalkraft bei zunehmender Drehzahl radial nach aussen bewegbare Regelelemente (36) anliegt, derart, dass das Schaufelrad (28) mindestens teilweise aus dem Bereich der Luftströmung verschoben wird.

4. Flüssigkeitszerstäuber nach Patentan-spruch 3, dadurch gekennzeichnet, dass das Schaufelrad (28) benachbart zu einer drehfest auf der Welle sitzenden Scheibe (31) angeordnet ist, dass zwischen der Scheibe (31) und dem Schaufelrad (28) ein radial sich nach aussen verjüngender, keilförmiger Raum (33) vorhanden ist, und dass die Regelelemente Kugeln (36) sind, die im Ringraum (33) untergebracht sind.

5. Flüssigkeitszerstäuber nach Patentan-spruch 2, dadurch gekennzeichnet, da s das Schaufelrad (28) frei drehbar auf der Wei ; (21) gelagert ist, und dass auf den einander benachbarten Flächen des Schaufelrades (28) bzw. der Scheibe (31) radiale Laufbahnen (35) für die Kugeln (36) angeordnet sind, und dass rippenförmige seitliche Begrenzungen (34) der Laufbahnen (35) vorhanden sind, um als Mitnehmer die Antriebskraft des Schaufelrades (28) über die Kugeln (36) auf die Scheibe (31) zu übertragen.

6. Flüssigkeitszerstäuber nach Patentan-spruch 3, dadurch gekennzeichnet, dass das Schaufelrad (28) mittels einer Feder (38) gegen die Kugeln (36) und die Scheibe (31) gepresst ist.

7. Flüssigkeitszerstäuber nach einem der vorangehenden Patentansprüche, gekennzeichnet durch Mittel (40, 41, 44) zur Erzeugung eines akustischen Signals Über- und/oder Unterschreiten bestimmter Drehzahlen.

8. Flüssigkeitszerstäuber nach den Patentansprüchen 3 und 7 dadurch gekennzeichnet, dass die Mittel zuer Erzeugung eines akustischen Signals durch eine Pfeife (44) gebildet sind, die bei der Verschiebung des Schaufelrades (28) aus dem Luftstrom von einem Teil der Luftströmung betätigt ist.

9. Flüssigkeitszerstäuber nach Patentan-spruch 7, dadurch gekennzeichnet, dass die Mittel zur Erzeugung eines akutischen Signals eine drehfest auf der Welle (21) sitzende Halterung (37) aufweisen, in welcher radial verschiebbar

Kugeln (41) gelagert sind, die bei abnehmender Zentrifugalkraft unter dem Druck von Federn (43) nach innen laufen und an einem Schallkörper (40) anschlagen.

10. Flüssigkeitszerstäuber nach Patentanspruch 1, dadurch gekennzeichnet, dass die Luftdüse (30) am Gehäuse (18) des Apparates tangential zum Schaufelrad (28) angeordnet ist.

11. Flüssigkeitszerstäuber nach einem der vorgehenden Patentansprüche dadurch gekennzeichnet, dass die Luftpumpe (1) eine doppelt wirkende, von Hand betätigbare Kolbenpumpe ist.

## Claims

1. A portable liquid spray apparatus for agrochemicals such as herbicidal or insecticidal compositions, which apparatus comprises a liquid container and a rotating spray plate provided with drive means, said spray plate being contained in a spray head, characterised in that the drive means for the spray plate (23) comprise a vane wheel (28, 29) adapted for being acted upon by an air stream from an air hand pump (1) and directed on to said vane wheel (28, 29) by a nozzle (30).

2. A liquid spray apparatus according to claim 1, characterised in that means for regulating the speed of the spray plate (23) are provided.

3. A liquid spray apparatus according to claim 2, characterised in that the vane wheel (28, 29) is mounted axially displaceably on a shaft (21) and is in contact with regulating elements (36) such that the vane wheel (28) is displaced at least partially out of the range of the air stream, said regulating elements (36) being movable radially outwardly under the influence of centrifugal forces and at increasing speed of the vane wheel (28).

4. A liquid spray apparatus according to claim 3, characterised in that the vane wheel (28) is disposed vicinal to disc means (31) which are mounted firmly on the shaft for rotation therewith, that between the disc means (31) and the vane wheel (28) there is an annular space (33) which narrows radially outwardly and has a wedge-shaped cross section, and that the regulating elements are balls (36) which are lodged in said annular space (33).

5. A liquid spray apparatus according to claim 2, characterised in that the vane wheel (28) is mounted freely rotatably on the shaft (21), and that radially extending races (35) for the balls (36) are arranged on the vicinal faces of the vane wheel (28) and of the disc means (31), said faces being turned towards each other, and that laterally of said races (35) rib-shaped delimiting wall means (34) are provided which act as cam means for transmitting the driving force of the vane wheel (28) to the disc means (31) by means of the balls (36).

6. A liquid spray apparatus according to

7

claim 3, characterised in that the vane wheel (28) is urged with spring means (38) into contact with the balls (36) and the disc means (31).

7. A liquid spray apparatus according to any one of the preceding claims, characterised by means (40, 41, 44) for generating an acoustic signal when the speed of the spray plate (23) is outside the range extending from a determined maximum speed to a determined minimum speed.

8. A liquid spray apparatus according to either of claims 3 and 7, characterised in that the means for generating an acoustic signal are formed by a whistle (44) which is activated by a part of the air stream when the vane wheel (28) is moved out of said air stream.

9. A liquid spray apparatus according to claim 7, characterised in that the means for generating an acoustic signal are provided with an abutment flange (37) mounted firmly on the shaft (21) for rotation therewith, in which abutment flange (37) there are lodged radially displaceably balls (41) which, due to the pressure of the spring means (43), move inwardly to impact upon a sound-generating body (40) when the centrifugal force decreases.

10. A liquid spray apparatus according to claim 1, characterised in that the air nozzle (30) is arranged at the apparatus housing (18) tangentially with regard to the vane wheel (28).

11. A liquid spray apparatus according to any one of the preceding claims, characterised in that the air pump (1) is a double-acting, manually operable piston air pump.

**Revendications**

1. Pulvérisateur portatif de liquide pour produits chimiques pour l'agriculture tels qu'herbicides et insecticides, comprenant un réservoir de liquide et un disque de distribution rotatif se trouvant dans une tête de projection et muni d'un système d'entraînement, caractérisé par le fait que le système d'entraînement du disque de distribution (23) est une roue à augets (28, 29) soumise à l'action d'un courant d'air délivré par une pompe à air manuelle (1) par l'intermédiaire d'une buse (30).

2. Pulvérisateur de liquide selon la revendication 1, caractérisé par le fait qu'il est prévu des moyens de régulation pour la vitesse de rotation du disque de distribution (23).

3. Pulvérisateur de liquide selon la revendication 2, caractérisé par le fait que la roue à augets (28, 29) est montée déplaçable axialement sur un arbre (21) et est appliquée sur des éléments de réglage (36) déplaçables radialement vers l'extérieur sous l'influence de la force centrifuge lorsque la vitesse de rotation augmente de manière que la roue à augets (28) soit au moins en partie écartée de la zone de l'écoulement d'air.

4. Pulvérisateur de liquide selon la revendication 3, caractérisé par le fait que la roue à augets

8

(28) est placée à proximité d'un plateau (31) monté fixé en rotation sur l'arbre, qu'entre le plateau (31) et la roue à augets (28) se trouve un espace cunéiforme (33) allant en s'amincissant radialement vers l'extérieur, et que les éléments de réglage sont des billes (36) qui sont logées dans l'espace annulaire (33).

5. Pulvérisateur de liquide selon la revendication 2, caractérisé par le fait que le roue à augets (28) est montée en rotation libre sur l'arbre (21) et que sur des surfaces mutuellement voisines de la roue à augets (28) et du plateau (31) sont disposés des chemins de roulement radiaux (35) pour les billes (36), et que des délimitations latérales (34) en forme de nervures des chemins de roulement (35) sont prévues pour transmettre, en tant qu'entraîneurs, la force motrice de la roue à augets (28) au plateau (31) par l'intermédiaire des billes (36).

6. Pulvérisateur de liquide selon la revendication 3, caractérisé par le fait que la roue à augets (28) est comprimée au moyen d'un ressort (38) contre les billes (36) et le plateau (31).

7. Pulvérisateur de liquide selon l'une des revendications précédentes, caractérisé par un moyen (40, 41, 44) pour la production d'un signal acoustique en cas de vitesses de rotation supérieures et/ou inférieures à des vitesses de rotation déterminées.

8. Pulvérisateur de liquide selon les revendications 3 et 7, caractérisé par le fait que le moyen pour la production d'un signal acoustique est constitué par un sifflet (44) qui, en cas de déplacement de la roue à augets (28) hors du courant d'air, est actionné par une partie de l'écoulement d'air.

9. Pulvérisateur de liquide selon la revendication 7, caractérisé par le fait que le moyen pour la production d'un signal acoustique présente un support (37), monté fixé en rotation sur l'arbre (21), et dans lequel sont disposées des billes (41) déplaçables radialement qui, lorsque la force centrifuge diminue, sont ramenées vers l'intérieur sous l'action de la force de ressorts (43) et viennent buter contre un corps (40) transmettant les bruits d'impact.

10. Pulvérisateur de liquide selon la revendication 1, caractérisé par le fait que la buse d'air (30) sur le boîtier (18) de l'appareil est montée tangentiellement à la roue à augets (28).

11. Pulvérisateur de liquide selon l'une des revendications précédentes, caractérisé par le fait que la pompe à air (1) est une pompe à piston à double effet à commande manuelle.

0 112 296

Fig. 1

Fig. 6

# Fig. 2

Fig. 3

0112296

## Fig. 4

## Fig. 5